# EUROPEAN PATENT SPECIFICATION

(11) **EP 3 284 644 B1**
(45) Date of publication and mention of the grant of the patent: **04.09.2019**
(21) Application number: 17275103.4
(22) Date of filing: 11.07.2017
(51) Int. Cl.: B60T 13/52, B60T 13/57, B60T 13/66, B60T 17/04, B60T 17/22, F04F 5/20

(54) **A METHOD OF CONTROLLING AN ASPIRATOR VALVE**
VERFAHREN ZUR STEUERUNG EINES ANSAUGVENTILS
PROCÉDÉ DE COMMANDE D'UNE SOUPAPE D'ASPIRATION

(30) Priority: 17.08.2016 GB 201614051
(43) Date of publication of application: 21.02.2018
(73) Proprietor: Ford Global Technologies, LLC, Dearborn, MI 48126 (US)
(72) Inventor: Valentine, Paul, Hornchurch, Essex RM11 1FR (GB); Leroy, Tom, Dagenham, Essex RM8 2AR (GB)
(74) Representative: Haseltine Lake Kempner LLP

(56) References cited:
- WO-A1-2008/132582
- GB-A- 2 532 092
- KR-A- 20040 045 214

## Description

This invention relates to an aspirator valve and, in particular, to a method for reducing the risk of malfunctioning of the aspirator valve due to icing up.

It is known to provide a motor vehicle with a vacuum assisted braking system in which a brake booster/ vacuum servo is used to amplify the force input from a driver of the motor vehicle.

Some vacuum assisted braking system use the vacuum in an inlet manifold of the engine to provide a source of vacuum for the brake booster. It is a disadvantage of such an arrangement that the level of the vacuum in the inlet manifold of the engine varies considerably during use of the engine and there are times where there is little or no vacuum present in the inlet manifold. To overcome this problem it has been proposed to use an aspirator connected to an inlet flow passage to the engine in order to boost the amount of vacuum available to the brake booster at times when there is very little vacuum present in the inlet manifold for use by the brake booster.

In order to minimise the interference of the aspirator with engine throttle control it is usual to provide the aspirator with a valve (an aspirator valve) to control the flow of air through the aspirator. The aspirator valve is normally operable to either permit flow through the aspirator when it is open or prevent the flow of air through the aspirator when it is closed. When the aspirator valve is combined with the aspirator the assembly is normally referred to as a 'combined valve and aspirator assembly'.

It is a problem with such aspirator valves that, at ambient temperatures at or below zero degrees Celsius, any moisture remaining in the aspirator valve after the engine is shut-down will tend to freeze. This icing up will often produce a bond causing the aspirator valve to malfunction when the engine is restarted.

UK Patent Application GB 2532092 discloses a method for preventing icing related malfunctioning of an aspirator valve.

It is an object of the invention to provide a method of controlling an aspirator valve to de-ice the aspirator valve following a period in which the engine has been shutdown in cold ambient conditions.

According to a first aspect of the invention there is provided a method of controlling an aspirator valve of a vacuum assisted braking system of a motor vehicle having an engine, characterised in that the method comprises, when a key-on event occurs following period of time during which the engine of the motor vehicle has been shutdown, checking whether one or more vehicle conditions is indicative of a need to de-ice the aspirator valve and, if one or more vehicle conditions indicate that there is a need to de-ice the aspirator valve, rapidly fully opening and closing the aspirator valve a number of times to de-ice the aspirator valve.

The vehicle conditions indicative of a need to de-ice the aspirator valve may comprise a current temperature that is below a predefined temperature limit.

The need may be established by comparing the current temperature with the predefined temperature limit.

The current temperature may be one of ambient temperature, engine coolant temperature, engine oil temperature, engine air inlet manifold temperature and aspirator valve temperature.

The method may further comprise varying the number of cycles the aspirator valve is opened and closed based upon an assessment of the severity of potential ice build up.

The severity of potential ice build up may be assessed based upon the length of time that the engine has remained shutdown and the ambient temperature during the shutdown period.

At least one ice breaking cycle may be completed before the engine is running following a key-on event.

The key-on event may be one following a shutdown in which ice is likely to have formed.

According to a second aspect of the invention there is provided a motor vehicle having an engine, a human machine interface to switch on and off the electrical circuits and the engine and a vacuum assisted braking system including an aspirator valve, an aspirator and an electronic controller to control opening and closing of the aspirator valve in response to one or more inputs characterised in that, when a key-on event occurs following a period of time during which the engine of the motor vehicle has been shutdown, the electronic controller is arranged to check whether at least one input is indicative of a need to de-ice the aspirator valve and, if at least one input indicates a need to de-ice the aspirator valve, the electronic controller is arranged to operate an actuator of the aspirator valve so as to produce a number of rapid fully open and close cycles of the aspirator valve.

The at least one input indicative of a need to remove ice may comprise a current sensed temperature that is below a predefined temperature limit.

The need may be established by the electronic controller comparing the current sensed temperature with the predefined temperature limit.

The at least one input may be one of a sensed current ambient temperature, a sensed current engine coolant temperature, a sensed current engine oil temperature, a sensed current temperature of an air inlet manifold of the engine and a sensed current temperature of part of the aspirator valve.

The electronic controller may be further arranged to vary the number of open and close cycles used to de-ice the aspirator valve based upon an assessment of the severity of potential ice build up.

The severity of potential ice build up may be assessed based upon a measurement of the length of time that the engine has remained shutdown and a measurement of the ambient temperature during the shutdown period.

The electronic controller may be arranged to carry out at least one open and close cycle of the aspirator valve before the engine is running following a key-on event.

The key-on event may be one following a shutdown in which ice is likely to have formed.

The invention will now be described by way of example with reference to the accompanying drawing of which:-
Fig.1 is a high level flow chart of an embodiment of a method of controlling an aspirator valve to prevent malfunctioning of the aspirator valve due to icing in accordance with a first aspect of the invention;
Fig.2 is a cross-section through a combined valve and aspirator assembly of a vacuum boosted braking system according forming part of a first embodiment of a motor vehicle according to a second aspect of the invention showing an aspirator valve of the assembly in a closed state;
Fig.3 is a schematic diagram of the first embodiment of a motor vehicle according to the second aspect of the invention;
Fig.4 is a schematic diagram of a second embodiment of a motor vehicle according to the second aspect of the invention;
Fig.5 is a cross-section through an aspirator valve forming part of a vacuum boosted braking system of the motor vehicle shown in Fig.4 showing the aspirator valve in a closed state;
Fig.6 is a cross-section of the aspirator valve of Fig.5 showing the aspirator valve in an open state; and
Fig.7 is a cross-section through an aspirator forming part of the vacuum boosted braking system of the motor vehicle shown in Fig.4.

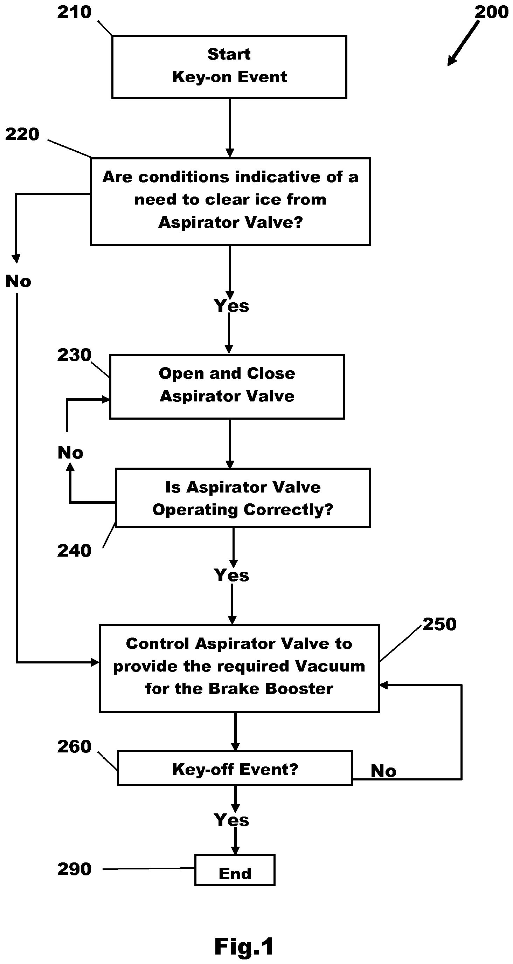

Referring firstly to Fig.1 a method 200 of controlling an aspirator valve starts at box 210 which represents a key-on event. In older motor vehicles the electrical circuits of the motor vehicle and the starting of an engine of the motor vehicle were affected via a key operated switch often referred to as an 'ignition switch'. The moving of such a switch into an 'on' position enabled and is referred to as a 'key-on' event. A further movement of the switch is used to engage the starter of the engine and so there is normally a short delay between when the electrical circuits are enabled and when the engine of the motor vehicle is actually running.

Moving the switch into an 'off' position will result in all major electrical circuits of the motor vehicle being deactivated and the engine of the motor vehicle will stop. This is referred to herein as a 'key-off' event.

However, it will be appreciated that on many modern motor vehicles a key switch is not used to effect 'key-on' and 'key-off' events but rather a different form of machine-human interface (HMI). This invention is not limited to any particular type of HMI and any type of HMI that can effect switching on of the major electrical circuits of the motor vehicle and subsequent starting of the engine and switching off the major electrical circuits of the motor vehicle and stopping of the engine could be used.

Referring back to box 210 from this box the method moves to box 220. As referred to above the engine of the motor vehicle will not start immediately following the key-on event there being a short delay between key-on and engine start and it is advantageous if the method 200 in accordance with this invention is executed in this short period before actual engine start.

In box 220 it is checked whether conditions indicative of a need to clear ice (de-ice the aspirator valve) from the aspirator valve are present. If such conditions are not present the method advances directly to box 250 and the aspirator valve is controlled in a normal mode of operation to provide the required vacuum for a brake booster. From box 250 the method advances to box 260 to check whether a key-off event has occurred and if it has the method ends at box 290 otherwise it returns to box 250. It will be appreciated that whenever a key-off event occurs the method will end.

Referring back to box 220 several conditions can be used to assess whether one or more conditions are present indicating a need to de-ice the aspirator valve.

These conditions can for example include:-
a/ whether engine coolant temperature is below a predefined temperature;
b/ whether an air inlet manifold temperature is below a predefined temperature;
c/ whether an engine oil temperature is below a predefined temperature;
d/ whether the temperature of a body of the aspirator valve is below a predefined temperature; and
e/ whether ambient air temperature is below a predefined temperature.

It will be appreciated that more than one of these conditions could be used to assess whether ice is likely to have formed in the aspirator valve.

It will also be appreciated that in the case of ambient air temperature this alone will not provide an accurate assessment of the probability of there being ice in the aspirator valve and so if ambient air is used then this will normally be combined with a value indicative of the time since the engine was last running to allow for the time required for the aspirator valve to cool after the engine has been shutdown.

If in box 220 the result of the assessment is that it is likely that ice has formed in the aspirator valve that will prevent it operating or prevent it operating normally then the method advances to box 230.

In box 230 the aspirator valve is fully opened and closed rapidly a number of times to break down the ice that may have formed. The number of cycles of this de-icing operation can be a fixed amount or can be varied based upon the severity of the operating conditions in which the aspirator valve is operating. For example, if a measured temperature of the aspirator valve is close to zero, then only a few cycles of ice clearing opening and closing is used but, if the measured temperature of the aspirator valve is circa minus 20°C, then a larger number of ice clearing cycles is used.

From box 230 the method advances in this case to box 240 where it is checked whether the aspirator valve is operating correctly. The correct operation of the aspirator valve can be assess in several ways such as, for example, by using a position sensor to physically measure the position of the moveable valve member of the aspirator valve as it is cycled or by comparing the force required to open the aspirator valve to a predefined value. For example, in the case of an electric solenoid operated aspirator valve, this assessment could be a comparison of a measurement of current draw versus expected current draw to open the aspirator valve.

In some embodiments the step referred to in box 240 is not used and the method advances directly from box 230 to box 250 but in either case after de-icing has taken place the method arrives at box 250 where the aspirator valve is controlled in a normal mode of operation to provide the required vacuum for a brake booster. Prior to reaching box 250 the engine will have started and so the engine will be running when box 250 is entered.

From box 250 the method advances to box 260 to check whether a key-off event has occurred and, if it has, the method ends at box 290 otherwise it returns to box 250.

Therefore, in summary, when ice is potentially present in the aspirator valve the aspirator valve is fully opened and closed rapidly to break up any ice that may interfere with normal operation of the aspirator valve. It will be appreciated that the 'de-icing' will not remove all of the ice from the aspirator valve it will merely make sure that any ice remaining will not affect the operation of the aspirator valve. It will be appreciated that after a few minutes of engine running the aspirator valve will be heated by the engine and any remaining ice will melt.

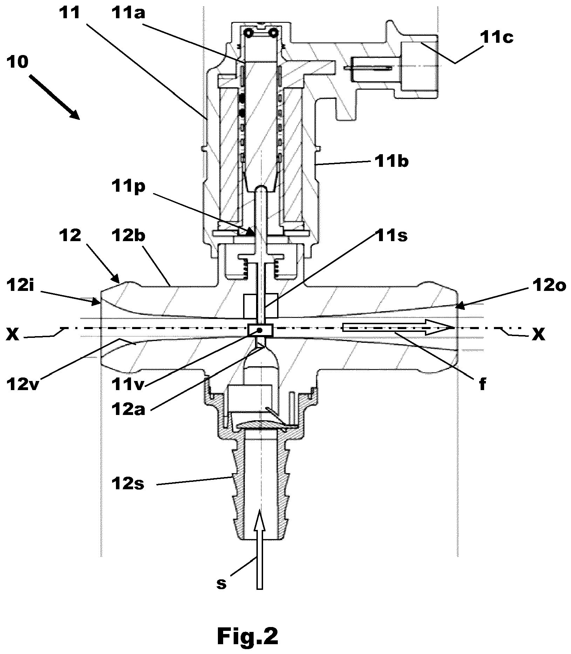

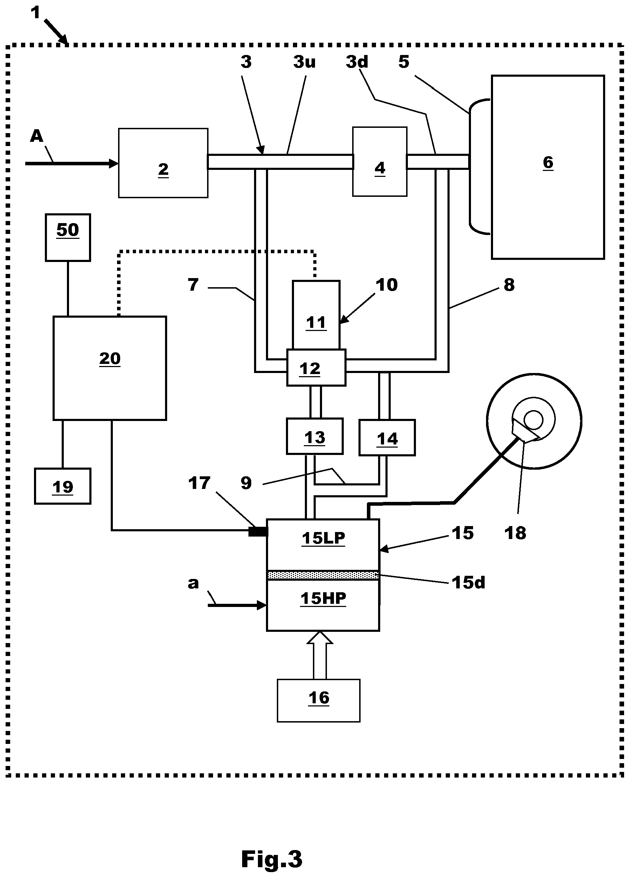

Referring now to Figs.2 and 3 there is shown a motor vehicle 1 having an engine 6 and a vacuum assisted braking system including a combined valve and aspirator assembly 10.

Ambient air is admitted to an induction system 3 for the engine 6 via an inlet 2 as indicated by the arrow 'A'. The inlet 2 may included an air filter to remove particulate matter from the air entering the induction system 3.

The induction system 3 comprises a first part 3u located upstream from a throttle valve 4 and a second part 3d located downstream from the throttle valve 4.

A combined valve and aspirator assembly 10 comprises an aspirator valve 11 and an aspirator 12.

The aspirator 12 has an inlet end 12i connected to the first part 3u of the induction system 3 at a position upstream from the throttle valve 4 via a first conduit 7 and an outlet end 12o connected via second conduit 8 to the second part 3d of the induction system 3 at a position downstream from the throttle valve 4 and upstream from an inlet manifold 5 of the engine 6.

The aspirator 12 has a vacuum inlet 12s connected via a first one way valve 13 to a low pressure side 15LP of a vacuum brake booster 15. The vacuum brake booster 15 also includes a diaphragm 15d separating the low pressure side 15LP from a high pressure side 15HP of the brake booster 15. Air at atmospheric pressure is admitted to the high pressure side 15HP of the brake booster 15 as indicated by the arrow 'a'.

A mechanical input is provided to the brake booster 15 from a brake pedal 16 when the brake pedal is depressed by a driver of the motor vehicle 1. When the brake pedal 16 is depressed hydraulic fluid at pressure is supplied from a master cylinder (not shown) forming part the brake booster 15 to a number of brake callipers 18 to effect braking of the vehicle 1.

A bypass conduit 9 bypasses the first one way valve 13 and includes a second one-way valve 14. The non-return valves 13, 14 prevent vacuum from being drawn back from the inlet manifold 5 when the pressure in the low pressure side 15LP of the brake booster 15 is below the pressure in the inlet manifold 5. That is to say, flow from the inlet manifold 5 to the low pressure side 15LP is prevented when the vacuum in the low pressure side 15LP is greater than the vacuum in the inlet manifold 5.

The bypass conduit 9 is connected at one end at a position between the first one way valve 13 and the low pressure side 15LP and is at an opposite end to the second part 3d of the induction system 3 at a position between the throttle valve 4 and the inlet manifold 5.

Opening and closing of the aspirator valve 11 is controlled by an electronic controller 20 in response to a number of inputs 50. The electronic controller 20 can be a single unit such as a powertrain control module or could be two or more interconnected units or modules operable in combination to effect control of the aspirator valve 11.

The electronic controller 20 receives, in the case of this example, inputs 50 include an input from a pressure sensor 17 used to sense the magnitude of the vacuum subsisting in the low pressure side 15LP of the brake booster 15 and an input from a temperature sensor (not shown) used to evaluate whether the conditions are indicative of those where icing of the aspirator valve 11 is likely to occur.

Opening and closing of the aspirator valve 11 during normal running of the engine 6 is based at least in part on the magnitude of the pressure sensed to be present in the low pressure side 15LP of the brake booster 15 by the pressure sensor 17. It will be appreciated that in other examples the vacuum subsisting in the low pressure side 15LP of the brake booster 15 could be modelled and not directly sensed.

The electronic controller 20 may directly control the aspirator valve 11 or may provide a signal to a separate unit (not shown) to control the medium used to control the opening and closing of the aspirator valve 11. For example and without limitation, the electronic controller 20 may control a valve used to control the flow of pneumatic pressure or hydraulic pressure to the aspirator valve 11 or supply a control signal to an electrical power supply or electric power amplifier.

A human machine interface 19 is provided to switch 'on' and switch 'off' the major electric circuits of the motor vehicle 1 and to control starting and stopping of the engine 6.

With particular reference to Fig.2, the combined valve and aspirator assembly 10 comprises the aspirator valve 11 and the aspirator 12 that are coupled together to form the combined valve and aspirator assembly 10.

The aspirator valve 11 comprises a body 11b in which is mounted an actuator 11a used to move a valve element in the form of a plug valve 11p having an elongate stem 11s supporting a valve head 11v.

In the case of this example the aspirator valve 11 is a normally closed valve and is opened by the application of pneumatic pressure via an inlet port 11c. However, it will be appreciated that the invention is not limited to the use of a normally closed aspirator valve or to the type of actuator used for the aspirator valve 11. For example, the actuator could be an electrical actuator such as a solenoid valve or a hydraulic actuator.

The aspirator 12 has a body 12b defining a venturi 12v through which in use air flows in the direction indicated by the arrow 'f'. The venturi 12v extends along a longitudinal axis X-X that is shown horizontally disposed in Fig.3 but need not be so disposed. An aperture 12a in the aspirator body 12b provides a connection between the venturi 12v and a vacuum inlet 12s.

The aspirator 12 is conventional in construction and operation. The flow of air through the venturi 12v causes the pressure in the region of smallest diameter to drop thereby drawing air out from the low pressure side 15LP of the brake booster 15 via the first one way valve 13 and into the aspirator 12 through the vacuum inlet 12s, as indicated by the arrow 's'. The air is then drawn via the aperture 12a into the venturi 12v.

During normal operation of the engine 6, the electronic controller 20 controls the aspirator valve 11 so as to move the plug valve 11p between a position in which it covers the aperture 12a in the body 12b of the aspirator 12, as shown in figure 2 that is referred to as an aspirator valve 'closed' position to a position in which the plug valve 11p does not obstruct the flow of air through the aperture 12a into the venturi 12v referred to as an aspirator valve 'open' position.

An annular valve seat surrounds the entrance to the aperture 12a for co-operation with the valve head 11v of the plug valve 11p. Although not shown in Fig.2 one of the valve head 11v and the valve seat will in practice include a compressible seal such as an "0" ring or lip seal to improve sealing between the valve head 11v and the valve seat.

During normal operation of the aspirator valve 11, the plug valve 11p of aspirator valve 11 is moved to the open position when the magnitude of the vacuum in the inlet manifold 5 is less than that required for the low pressure side 15LP of the brake booster 15 and is moved to the closed position when the magnitude of the vacuum in the inlet manifold 5 is sufficient for the low pressure side 15LP of the brake booster 15.

During normal running of the engine 6 the operation of the combined valve and aspirator assembly 10 therefore follows conventional practice.

However, when the engine 6 has been shutdown in a situation where the motor vehicle 1 is operating in a low ambient temperature likely to produce icing in the combined valve and aspirator assembly 10, the electronic controller 20 is programmed in response to an input indicative of the likelihood of icing to rapidly fully open and close the aspirator valve 11 a number of times referred to as 'de-icing cycles' when a key-on event occurs.

The input to the electronic controller 20 indicative of potential icing can be one of a number of temperature sensor inputs such as for example:-
a/ an engine coolant temperature sensor;
b/ an inlet manifold temperature sensor;
c/ an engine oil temperature sensor;
d/ an aspirator valve temperature sensor; and
e/ an ambient air temperature sensor.

By comparing this with a predefined limit the electronic controller 20 can decide whether the aspirator valve 11 needs to be controlled to de-ice it.

By rapidly fully opening and closing the aspirator valve 11 any ice that has formed around the plug valve 11p between the plug valve 11p and the aspirator body 12b where it might collect in the venturi 12v is broken up.

Although not shown the valve head 11v can have a projection that engages with the aperture 12a with clearance when the aspirator valve 11 is closed. In such a case the projection on the valve head 11v will act as an ice pick clearing away any ice within the aperture 12a when ice clearing takes place.

In some embodiments the number of cycles of opening and closing of the aspirator valve 11 is dependent upon the temperature the vehicle 1 has been idle in so that at very low ambient temperatures well below zero Celsius more open and close cycles are used than in ambient temperature close to zero Celsius. The electronic controller 20 in such a case is arranged to vary the number of open and close cycles used to de-ice the aspirator valve based upon an assessment of the severity of potential ice build up.

The decision as to whether de-icing is required may also be dependent upon the time the vehicle has been idle or a combination of idle time and ambient temperature. This is because if the vehicle is idle in an ambient temperature only slightly below zero Celsius for a short period of time ice will normally not have had time to form due to residual heat from the last engine run cycle. In such a case, the electronic controller 20 assesses the severity of potential ice build up based upon the measurement of the length of time that the engine has remained shutdown and the measurement of the ambient temperature during the shutdown period.

Therefore, in summary, when the engine 6 is restarted following an idle period in an environment at or below zero Celsius, the risk of the aspirator valve 11 malfunctioning due to ice bonding the plug valve 11p to the aspirator body 12b is eliminated by carrying out a de-icing method in accordance with this invention as soon as a key-on event occurs.

Therefore, immediately following a key-on following a shutdown period in which ice may have formed and preferably prior to start-up of the engine 6 that is to say, before the engine 6 is running, the aspirator valve 11 is cleared of any ice build up. This is important because it is often the case that following an engine start there is a need for replenishing of the vacuum in the low pressure side 15LP of the brake booster 15 but the magnitude of vacuum available directly from the engine 6 is insufficient to achieve this and so effective operation of the aspirator 12 is required at this point in time.

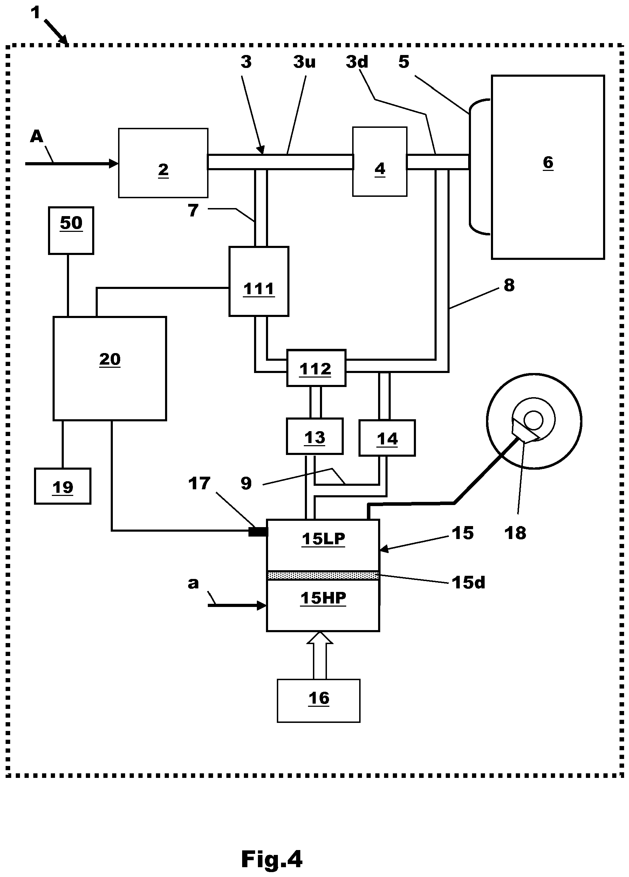

With reference to Fig.4 there is shown a motor vehicle 1 that is in most respects the same as that previously described with respect to Fig.3 and so will not be described again in detail. The only significant difference is that in the case of this embodiment the aspirator valve 111 is separate from the aspirator 112 and is positioned upstream from the aspirator 112 so as to control the flow of air from the first part 3u of the induction system 3 via the first conduit 7 to an inlet end of the aspirator 112 rather than the flow of air from the a low pressure side 15LP of the vacuum brake booster 15.

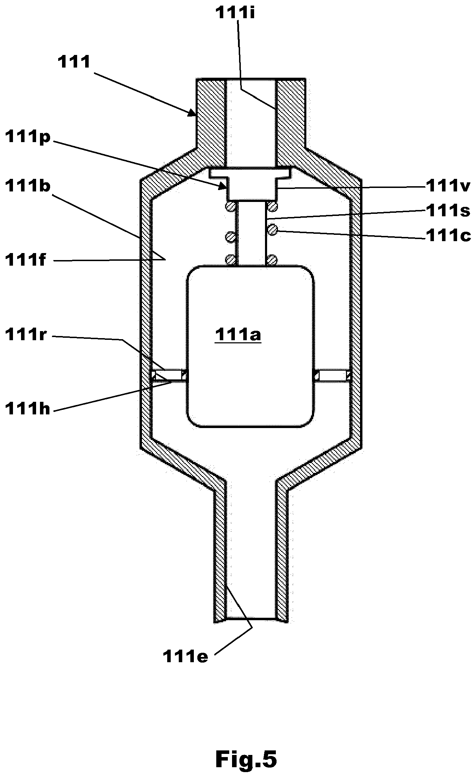

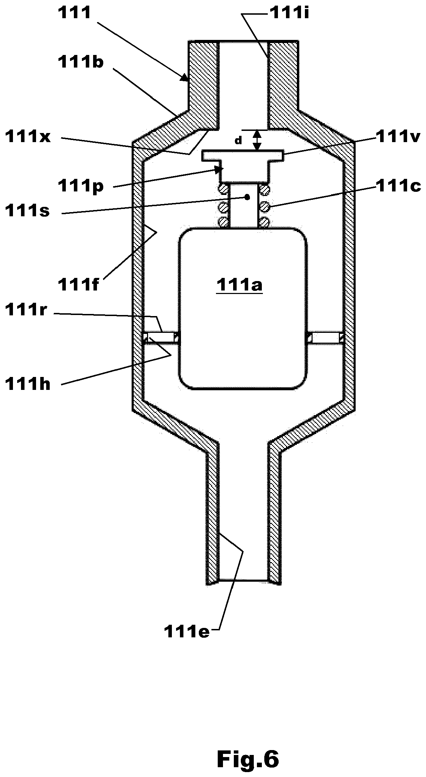

Figs.5 and 6 show in greater detail the aspirator valve 111 in respective closed and open states.

The aspirator valve 111 comprises a body 111b in which is mounted an electric solenoid actuator 111a used to move a valve element in the form of a plug valve 111p. The plug valve 111p has an elongate stem 111s engaged with the actuator 111a and a valve head 111v supported by the elongate stem 111s. A helical spring 111c overlying the elongate stem 111s is used to bias the plug valve 111p into a closed position as shown in Fig.5.

An annular ring 111r is used to support the actuator 111a within a cavity 111f defined by the body 111b. The annular ring 111r has a number of circumferentially spaced apertures or holes 111h formed therein to allow air to flow from an inlet 111i of the aspirator valve 111 to an outlet 111e of the aspirator valve 111 when the aspirator valve 111 is in an open state as shown in Fig.6.

In the case of this example the aspirator valve 111 is a normally closed valve and is opened by the application of electrical power to the electric solenoid actuator 111. However, it will be appreciated that the invention is not limited to the use of a normally closed aspirator valve or to the type of actuator used for the aspirator valve 111. For example, the actuator could be a pneumatic actuator or a hydraulic actuator.

It will be appreciated that the aspirator valve 111 will be opened when there is insufficient vacuum being generated in the intake manifold 5 to produce the required vacuum in the low pressure side 15LP of the vacuum brake booster 15 and that the bypass conduit 9 that bypasses the first one way valve 13 and includes the second one-way valve 14 is used to produce the required vacuum in the low pressure side 15LP of a vacuum brake booster 15 when the aspirator valve 111 is closed and there is sufficient vacuum being generated in the intake manifold 5.

The valve head 111v of the aspirator valve 111 is moveable between open and closed positions by the solenoid actuator 111a in response to a control signal or signals from the electronic controller 20. In the fully open position, the valve head 111v of the aspirator valve 111 is spaced a distance "d" from an annular valve seat 111x formed in the valve body 111b for co-operation with the valve head 111v. In this state air can flow freely from the inlet 111i of the aspirator valve 111 to the outlet 111e of the aspirator valve 111 and from there to the aspirator 112.

When the aspirator valve 111 is in the closed state the valve head 111v abuts against the valve seat 111x and, although not shown, a compressible seal located between the valve seat 111x and the valve head 111v will be compressed thereby preventing air from flowing through the aspirator valve 111.

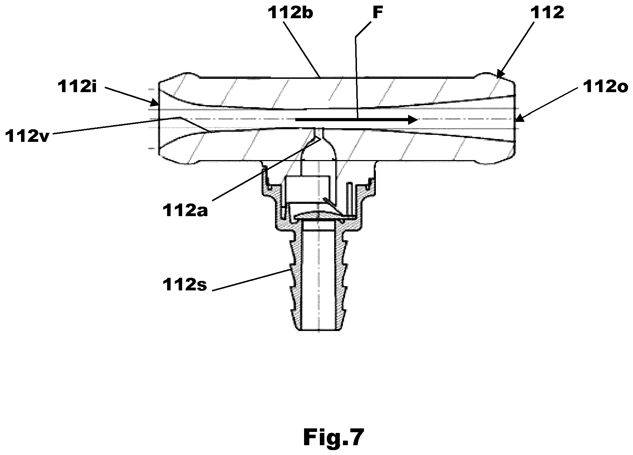

The aspirator 112 shown in Fig.7 has a body 112b defining a venturi 112v having an inlet end 112i arranged to receive a supply of air from the aspirator valve and an outlet end 112o connected by the second conduit 8 to the second part 3d of the induction system 3 at a position downstream from the throttle valve 4 and upstream from an inlet manifold 5 of the engine 6.. In use, air flows in the direction indicated by the arrow "F" from the inlet 112i to the outlet 112o of the venturi 112v.

An aperture 112a in the aspirator body 112b at the smallest diameter provides a connection between the venturi 112v and a vacuum inlet 112s connected to the low pressure side 15LP of a vacuum brake booster 15.

The aspirator 112 is conventional in construction and operation. The flow of air through the venturi 112v causes the pressure in the region of smallest diameter to drop thereby drawing air out from the low pressure side 15LP of the brake booster 15 via the first one way valve 13 and into the aspirator 112 through the vacuum inlet 112s. The air is then drawn via the aperture 112a into the venturi 112v.

During normal operation of the engine 6, the electronic controller 20 controls the aspirator valve 111 so as to move the plug valve 111p between the 'closed' position to a position in which the plug valve 111p does not obstruct the flow of air through the body 111b referred to as an aspirator valve 'open' position.

The aspirator valve 111 during normal operation is moved to the open position when the magnitude of the vacuum in the inlet manifold 5 is less than that required for the low pressure side 15LP of the brake booster 15 and is moved to the closed position when the magnitude of the vacuum in the inlet manifold 5 is sufficient for the low pressure side 15LP of the brake booster 15. Therefore during normal running of the engine 6 the operation of the aspirator valve 111 is arranged to follow conventional practice.

However, when the engine 6 has been shutdown in a situation where the motor vehicle 1 is operating in a low ambient temperature likely to produce icing in the aspirator valve 111, the electronic controller 20 is programmed in response to an input indicative of potential icing to rapidly fully open and close the aspirator valve 111 as soon as the engine is restarted. The input indicative of potential icing is as before an input from one or more temperature sensors forming one of the inputs 50 to the electronic controller 20.

This rapid opening and closing of the aspirator valve 111 will break up any ice that has formed around the plug valve 111p between the valve head 111v and the body 111b.

Although not shown, the valve head 111v can have a projection that engages with the inlet 111i of the body 111b with clearance when the aspirator valve 111 is in the closed state. With such an arrangement the projection will act as an ice pick breaking up ice in the inlet 111i close to the valve seat 111x when de-icing takes place.

As before, the number of cycles of opening and closing of the aspirator valve 111 can be based upon the temperature the vehicle 1 has been idle in so that at very low ambient temperatures well below zero Celsius more open and close cycles are used than in ambient temperature close to zero Celsius. In other embodiments a fixed number of cycles are used. The electronic controller 20 in such a case is arranged to vary the number of open and close cycles used to de-ice the aspirator valve based upon an assessment of the severity of potential ice build up.

The decision as to whether de-icing is required may also be dependent upon the time the vehicle has been idle or a combination of idle time and ambient temperature. This is because if the vehicle is idle in an ambient temperature only slightly below zero Celsius for a short period of time ice will normally not have had time to form due to residual heat from the last engine run cycle. In such a case, the electronic controller 20 assesses the severity of potential ice build up based upon the measurement of the length of time that the engine has remained shutdown and the measurement of the ambient temperature during the shutdown period.

Therefore, as before, when the engine 6 is restarted following an idle period in an environment below zero Celsius, the risk of the aspirator valve 111 malfunctioning due to ice bonding the plug valve 111p to the body 111b is eliminated by carrying out a de-icing method in accordance with this invention as soon as a key-on event occurs.

It will be appreciated that the term "de-ice" as meant herein means to clear ice that has built up in the aspirator valve by a percussive process and not melt ice in the aspirator valve.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A method of controlling an aspirator valve (11, 111) of a vacuum assisted braking system of a motor vehicle (1) having an engine (6), **characterised in that** the method comprises, when a key-on event occurs following period of time during which the engine (6) of the motor vehicle (1) has been shutdown, checking whether one or more vehicle conditions is indicative of a need to de-ice the aspirator valve (11, 111) and, if one or more vehicle conditions indicate that there is a need to de-ice the aspirator valve (11, 111), rapidly fully opening and closing the aspirator valve (11, 111) a number of times to de-ice the aspirator valve (11, 111).

2. A method as claimed in claim 1 wherein the vehicle conditions indicative of a need to de-ice the aspirator valve (11, 111) comprise a current temperature that is below a predefined temperature limit.

3. A method as claimed in claim 2 wherein the need is established by comparing the current temperature with the predefined temperature limit.

4. A method as claimed in claim 2 or in claim 3 wherein the current temperature is one of ambient temperature, engine coolant temperature, engine oil temperature, engine air inlet manifold temperature and aspirator valve temperature.

5. A method as claimed in any of claims 1 to 4 wherein the method further comprises varying the number of cycles the aspirator valve (11, 111) is opened and closed based upon an assessment of the severity of potential ice build up.

6. A method as claimed in claim 5 wherein the severity of potential ice build up is assessed based upon the length of time that the engine (6) has remained shutdown and the ambient temperature during the shutdown period.

7. A method as claimed in any of claims 1 to 6 wherein at least one ice breaking cycle is completed before the engine (6) is running following a key-on event.

8. A motor vehicle (1) having an engine (6), a human machine interface (19) to switch on and off the electrical circuits and the engine (6) and a vacuum assisted braking system including an aspirator valve(11, 111), an aspirator (12, 112) and an electronic controller (20) to control opening and closing of the aspirator valve (11, 111) in response to one or more inputs (50) **characterised in that**, when a key-on event occurs following a period of time during which the engine (6) of the motor vehicle (1) has been shutdown, the electronic controller (20) is arranged to check whether at least one input (50) is indicative of a need to de-ice the aspirator valve (11, 111) and, if at least one input indicates a need to de-ice the aspirator valve (11, 111), the electronic controller (20) is arranged to operate an actuator (11a, 111a) of the aspirator valve (11, 111) so as to produce a number of rapid fully open and close cycles of the aspirator valve (11, 111).

9. A vehicle as claimed in claim 8 wherein the at least one input indicative of a need to remove ice comprises a current sensed temperature that is below a predefined temperature limit.

10. A vehicle as claimed in claim 9 wherein the need is established by the electronic controller (20) comparing the current sensed temperature with the predefined temperature limit.

11. A vehicle as claimed in claim 9 or in claim 10 wherein the at least one input is one of a sensed current ambient temperature, a sensed current engine coolant temperature, a sensed current engine oil temperature, a sensed current temperature of an air inlet manifold (5) of the engine (6) and a sensed current temperature of part of the aspirator valve (11, 111).

12. A vehicle as claimed in any of claims 8 to 11 wherein the electronic controller (20) is further arranged to vary the number of open and close cycles used to de-ice the aspirator valve (11, 111) based upon an assessment of the severity of potential ice build up.

13. A vehicle as claimed in claim 12 wherein the severity of potential ice build up is assessed based upon a measurement of the length of time that the engine (6) has remained shutdown and a measurement of the ambient temperature during the shutdown period.

14. A vehicle as claimed in any of claims 8 to 13 wherein, the electronic controller (20) is arranged to carry out at least one open and close cycle of the aspirator valve (11, 111) before the engine (6) is running following a key-on event.

## Patentansprüche

1. Verfahren zum Steuern eines Ansaugventils (11, 111) eines vakuumunterstützten Bremssystems eines Kraftfahrzeugs (1) mit einem Motor (6), **dadurch gekennzeichnet, dass**, wenn nach einer Zeitperiode, in der der Motor (6) des Kraftfahrzeugs (1) abgestellt war, ein Schlüssel-ein-Ereignis eintritt, das Verfahren das Prüfen, ob eine oder mehrere Fahrzeugbedingungen einen Bedarf zum Enteisen des Ansaugventils (11, 111) anzeigen, und wenn eine oder mehrere Fahrzeugbedingungen anzeigen, dass ein Bedarf zum Enteisen des Ansaugventils (11, 111) besteht, das schnelle vollständige mehrmalige Öffnen und Schließen des Ansaugventils (11, 111), um das Ansaugventil (11, 111) zu enteisen, umfasst.

2. Verfahren nach Anspruch 1, wobei die Fahrzeugbedingungen, die einen Bedarf zum Enteisen des Ansaugventils (11, 111) anzeigen, eine aktuelle Temperatur, die unter einem vordefinierten Temperaturgrenzwert liegt, umfassen.

3. Verfahren nach Anspruch 2, wobei der Bedarf durch Vergleichen der aktuellen Temperatur mit dem vordefinierten Temperaturgrenzwert festgelegt wird.

4. Verfahren nach Anspruch 2 oder Anspruch 3, wobei die aktuelle Temperatur eines von einer Umgebungstemperatur, einer Motorkühlmitteltemperatur, einer Motoröltemperatur, einer Motorlufteinlassverteilertemperatur und einer Ansaugventiltemperatur ist.

5. Verfahren nach einem der Ansprüche 1 bis 4, wobei das Verfahren ferner das Variieren der Anzahl von Zyklen, bei denen das Ansaugventil (11, 111) geöffnet und geschlossen wird, auf Basis einer Beurteilung des Ausmaßes einer potenziellen Eisansammlung umfasst.

6. Verfahren nach Anspruch 5, wobei das Ausmaß einer potenziellen Eisansammlung auf Basis der Länge der Zeit, die der Motor (6) abgestellt war, und der Umgebungstemperatur während der Abstellperiode beurteilt wird.

7. Verfahren nach einem der Ansprüche 1 bis 6, wobei mindestens ein Eisbruchzyklus abgeschlossen wird, bevor der Motor (6) nach einem Schlüssel-ein-Ereignis läuft.

8. Kraftfahrzeug (1) mit einem Motor (6), einer Mensch-Maschine-Schnittstelle (19) zum Ein- und Ausschalten der elektrischen Schaltungen und des Motors (6) sowie einem vakuumunterstützten Bremssystem, das ein Ansaugventil (11, 111), eine Ansaugvorrichtung (12, 112) und eine elektronische Steuerung (20) zum Steuern des Öffnens und Schließens des Ansaugventils (11, 111) in Reaktion auf eine oder mehrere Eingaben (50) beinhaltet, **dadurch gekennzeichnet, dass**, wenn nach einer Zeitperiode, während der der Motor (6) des Kraftfahrzeugs (1) abgestellt war, ein Schlüssel-ein-Ereignis eintritt, die elektronische Steuerung (20) angeordnet ist zu prüfen, ob mindestens eine Eingabe (50) einen Bedarf zum Enteisen des Ansaugventils (11, 111) anzeigt, und wenn mindestens eine Eingabe einen Bedarf zum Enteisen des Ansaugventils (11, 111) anzeigt, die elektronische Steuerung (20) angeordnet ist, den Aktuator (11a, 111a) des Ansaugventils (11, 111) zu betätigen, um eine Anzahl von schnellen und vollständigen Öffnungs- und Schließzyklen des Ansaugventils (11, 111) zu produzieren.

9. Fahrzeug nach Anspruch 8, wobei mindestens eine Eingabe, die einen Bedarf zum Entfernen von Eis anzeigt, eine aktuelle erfasste Temperatur umfasst, die unter einem vordefinierten Temperaturgrenzwert liegt.

10. Fahrzeug nach Anspruch 9, wobei der Bedarf durch die elektronische Steuerung (20), die die aktuelle erfasste Temperatur mit dem vordefinierten Temperaturgrenzwert vergleicht, festgelegt wird.

11. Fahrzeug nach Anspruch 9 oder Anspruch 10, wobei die mindestens eine Eingabe eines von einer erfassten aktuellen Umgebungstemperatur, einer erfassten aktuellen Motorkühlmitteltemperatur, einer erfassten aktuellen Motoröltemperatur, einer erfassten aktuellen Temperatur eines Lufteinlassverteilers (5) des Motors (6) und einer erfassten aktuellen Temperatur eines Teils des Ansaugventils (11, 111) ist.

12. Fahrzeug nach einem der Ansprüche 8 bis 11, wobei die elektronische Steuerung (20) ferner angeordnet ist, die Anzahl der Öffnungs- und Schließzyklen, die verwendet werden, um das Ansaugventil (11, 111) zu enteisen, auf Basis einer Beurteilung des Ausmaßes einer potenziellen Eisansammlung zu variieren.

13. Fahrzeug nach Anspruch 12, wobei das Ausmaß einer potenziellen Eisansammlung auf Basis einer Messung der Länge der Zeit, die der Motor (6) abgestellt war, und einer Messung der Umgebungstemperatur während der Abstellperiode beurteilt wird.

14. Fahrzeug nach einem der Ansprüche 8 bis 13, wobei die elektronische Steuerung (20) angeordnet ist, nach einem Schlüssel-ein-Ereignis mindestens einen Öffnungs- und Schließzyklus des Ansaugventils (11, 111) auszuführen, bevor der Motor (6) läuft.

## Revendications

1. Un procédé de contrôle d'une soupape d'aspiration (11, 111) d'un système de freinage assisté par dépression d'un véhicule automobile (1) ayant un moteur (6), **caractérisé en ce que** le procédé comprend, lorsqu'un événement de mise en marche survient après une période de temps pendant laquelle le moteur (6) du véhicule automobile (1) a été arrêté, la vérification de si un ou plusieurs états du véhicule est indicatif de la nécessité de dégivrer la soupape d'aspiration (11, 111) et si un ou plusieurs états du véhicule indiquent qu'il est nécessaire de dégivrer la soupape d'aspiration (11, 111), en ouvrant et fermant rapidement et complètement la soupape d'aspiration (11, 111) à plusieurs reprises pour dégivrer la soupape d'aspiration (11, 111).

2. Un procédé selon la revendication 1, dans lequel les états du véhicule indiquant la nécessité de dégivrer la soupape d'aspiration (11, 111) comprennent une température actuelle qui est inférieure à une limite de température prédéfinie.

3. Un procédé selon la revendication 2, dans lequel la nécessité est établie en comparant la température actuelle avec la limite de température prédéfinie.

4. Un procédé selon la revendication 2 ou 3, dans lequel la température actuelle est celle de la température ambiante, la température du liquide de refroidissement du moteur, la température de l'huile moteur, la température du collecteur d'admission d'air du moteur et la température de la soupape d'aspiration.

5. Un procédé selon l'une quelconque des revendications 1 à 4, dans lequel le procédé comprend en outre la variation du nombre de cycles d'ouverture et de fermeture de la soupape d'aspiration (11, 111) sur la base d'une évaluation de la gravité de l'accumulation potentielle de glace.

6. Un procédé selon la revendication 5, dans lequel la gravité de l'accumulation potentielle de glace est évaluée en fonction de la durée pendant laquelle le moteur (6) est resté à l'arrêt et de la température ambiante pendant la période d'arrêt.

7. Un procédé selon l'une quelconque des revendications 1 à 6, dans lequel au moins un cycle de brisement de glace est achevé avant que le moteur (6) ne tourne à la suite d'un événement de mise en marche.

8. Un véhicule automobile (1) comportant un moteur (6), une interface homme-machine (19) pour mettre en marche et arrêter les circuits électriques et le moteur (6) et un système de freinage assisté par dépression comprenant une soupape d'aspiration (11, 111), un aspirateur (12, 112) et un contrôleur électronique (20) pour contrôler l'ouverture et la fermeture de la soupape d'aspiration (11, 111) en réponse à une ou plusieurs entrées (50), **caractérisé en ce que**, lorsqu'un événement de mise en marche survient après une période de temps pendant laquelle le moteur (6) du véhicule automobile (1) a été arrêté, le contrôleur électronique (20) est disposé pour vérifier si au moins une entrée (50) est indicative de la nécessité de dégivrer la soupape d'aspiration (11, 111) et, si au moins une entrée indique la nécessité de dégivrer la soupape d'aspiration (11, 111), le contrôleur électronique (20) est disposé pour faire fonctionner un actionneur (11a, 111a) de la soupape d'aspiration (11, 111) afin de produire plusieurs cycles rapides de fermeture et d'ouverture complète de la soupape d'aspiration (11, 111).

9. Un véhicule selon la revendication 8, dans lequel l'au moins une entrée indiquant la nécessité d'éliminer la glace comprend une température détectée actuelle qui est inférieure à une limite de température prédéfinie.

10. Un véhicule selon la revendication 9, dans lequel la nécessité est établie par le contrôleur électronique (20) comparant la température détectée actuelle avec la limite de température prédéfinie.

11. Un véhicule selon la revendication 9 ou 10, dans lequel l'au moins une entrée est celle d'une température ambiante actuelle détectée, une température de liquide de refroidissement de moteur actuelle détectée, une température d'huile moteur actuelle détectée, une température actuelle détectée d'un collecteur d'admission d'air (5) du moteur (6) et une température actuelle détectée d'une partie de la soupape d'aspiration (11, 111).

12. Un véhicule selon l'une quelconque des revendications 8 à 11, dans lequel le contrôleur électronique (20) est en outre disposé pour faire varier le nombre de cycles d'ouverture et de fermeture utilisés pour dégivrer la soupape d'aspiration (11, 111) sur la base d'une évaluation de la gravité de l'accumulation potentielle de glace.

13. Un véhicule selon la revendication 12, dans lequel la gravité de l'accumulation potentielle de glace est évaluée sur la base d'une mesure de la durée pendant laquelle le moteur (6) est resté à l'arrêt et d'une mesure de la température ambiante pendant la période d'arrêt.

14. Un véhicule selon l'une quelconque des revendications 8 à 13, dans lequel le contrôleur électronique (20) est disposé pour effectuer au moins un cycle d'ouverture et de fermeture de la soupape d'aspiration (11, 111) avant que le moteur (6) ne tourne après un événement de mise en marche.
